# EUROPEAN PATENT APPLICATION

(11) **EP 4 618 354 A1**
(43) Date of publication of application: **17.09.2025**
(21) Application number: 22964641.9
(22) Date of filing: 08.11.2022
(51) Int. Cl.: H02J 7/00, H02J 7/02, H01R 13/66

(54) **SMART CHARGER FOR MOBILE PHONES**

(71) Applicant: Daniel Elias de Lima Lopes - MEI, 28950-000 Armação de Buzios, RJ (BR)
(72) Inventor: LIMA LOPES, Daniel Elias de, 28950-000 ARMAÇÃO DE BUZIOS, RJ (BR)
(74) Representative: Openshaw & Co.
(86) International application number: PCT/BR2022/050427
(87) International publication number: WO 2024/098121

(57) **Abstract**

The Utility Model proposed herein refers to an accessory device for mobile phones, in particular smartphones, and is intended to ensure the use of the device in operation for an extended period, such that when the cell phone battery runs out, the user does not need an electrical network to charge the smartphone; he will only need to use his own charger to accomplished this task, and that will also guarantee at least two full charges for his device, with more freedom, flexibility and autonomy.

## Description

### FIELD OF APPLICATION

This application refers to a Utility Model for an accessory device for cell phone devices, in particular smartphones, which aims to ensure the use of the device in operation for a prolonged period, as it allows the simultaneous charging of the mobile phone and an additional battery and a power supply built into the charger itself.

### TECHNICAL REASONING

With the development of technology in the field of mobile telephony and the availability of high-performance devices at increasingly affordable prices, communication via mobile phones has become frequent and common in different segments.

It has become common to find people in airports, restaurants, shopping centers, and waiting rooms, looking for electrical outlets to recharge their devices due to situations in which they are surprised by the lack of charge in their cell phone battery, in order to be able to resume an important conversation, participate in a business meeting, communicate with family, or take online courses, mainly.

To charge the battery of a mobile phone, charging devices are used that, through a cable connected to an electrical outlet and the mobile phone, connect to the device's internal circuits to provide charge to the battery.

In general, users charge their mobile phones overnight, to have them ready for use the next day. Although we already have charging devices available on the market that work by magnetic induction, allowing you to recharge your mobile phone without using an electrical outlet, these devices are quite expensive and also need to be charged beforehand. As a result, when there is no longer more than one electrical outlet available, recharging the charger ends up being left aside and forgotten.

In order to solve this problem, patent application BR 202021013847-0 U2 shows a device that allows to charge, simultaneously, the cell phone battery and an additional battery built into its structure, so that once the mobile phone is charged and its battery is discharged with use, the additional battery built into the charger will charge the mobile phone through the connection cable to the mobile phone, without the need to make any connection to an electrical outlet. Therefore, the accessory device allows the user to recharge the battery of his mobile phone and continue using the device without interrupting an ongoing activity, ensuring freedom, independence and flexibility to charge his mobile phone anywhere, without limiting their mobility.

Although this development is simple and capable of solving the issue in a safe and peaceful way, it still presents some technical problems for its use, related to its configuration.

The first problem concerns the loss of battery charge, which can occur while the device is not being used.

The second issue is related to the situation where the mobile phone and the additional battery are completely discharged. In this situation, considering the way the device was configured, two technical infeasibilities occur, i.e., two different power supply systems, since the power supply and the battery charging protection board, used for safe charging/discharging, can cause a short circuit and damage the power supply and/or the battery.

The current filed application aims to solve these issues, which will be described in detail so that they can be better understood.

### SUMMARY

The Utility Model proposed herein refers to an accessory device for mobile phones, in particular smartphones, and is intended to ensure the use of the device in operation for an extended period, such that when the cell phone battery runs out, the user does not need an electrical network to charge the smartphone; he will only need to use his own charger to accomplished this task, and that will also guarantee at least two full charges for his device, with more freedom, flexibility and autonomy.

### BRIEF DESCRIPTION OF THE DRAWINGS

Figure 1 shows a perspective view of the new charger model now proposed.
Figure 2 shows a perspective view of the new charger, showing the cell phone charging input points.
Figure 3 shows a bottom perspective view of the new charger, in which the battery charge indicator light is shown.

### DETAILED DESCRIPTION OF THE OBJECT

The Utility Model proposed herein refers to an accessory device for mobile phones devices, in particular smartphones, and is intended to ensure the use of the device in operation for an extended period, such that when the cell phone battery runs out, the user does not need an electrical network to charge the smartphone. This new model is intended to ensure the use of the device in operation for an extended period, as it allows the mobile phone, and an additional battery and power supply to be charged simultaneously, which are built into the charger itself.

In the Utility Model now proposed, entitled "smart charger for cell phone", the above-mentioned problems, as shown in document BR 202021013847-0 U2, were duly analyzed and solved.

To solve this problem of loss of charge while the device is not being used, a commercially available portable charger was introduced into the accessory device that has hardware (electronic equipment) capable of preventing possible loss of battery charge. No such problems were identified in the experimental tests carried out.

In the event that the battery system is completely discharged, to ensure the safety of using the device, charging takes place independently, i.e., when the device is connected to the electrical outlet, the cell phone battery automatically begins to charge, and the additional battery is charged by the power supply independently. Therefore, if the cell phone battery runs out while the device is in use, the user simply needs to connect it to the auxiliary battery, without the need to use an electrical outlet.

Thus, the new Utility Model has the following characteristics:
- a connection point to the electrical network, located on one side of the device, where an electrical outlet will be placed;
- the charging points of the device, being a USB input for the cell phone battery, located on the back of the device, which will be used by the user when the device is unplugged, and two USB inputs for the power supply, located on the lateral side opposite to the connection point to the electrical network, which will be used when the device is connected to the electrical outlet; the device's charging points, being a USB input for the cell phone battery, located on the back of the device, which will be used by the user when the device is not connected to the electrical outlet, and two USB inputs for the power supply, located on the lateral side opposite to the connection point to the electrical network, which will be used when the device is connected to the electrical outlet
- points of the battery charge indicator lights, located on the bottom of the device.

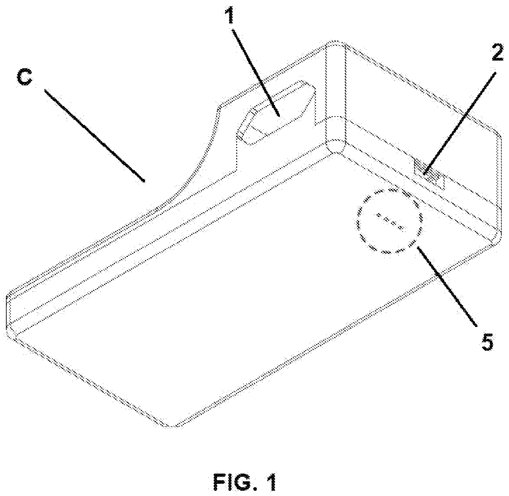

Figure 1 shows a perspective view of the smart charger **C** herein disclosed, in which the connection point **(1)** to the electrical network is shown, i.e., the part where the electrical outlet will be placed.

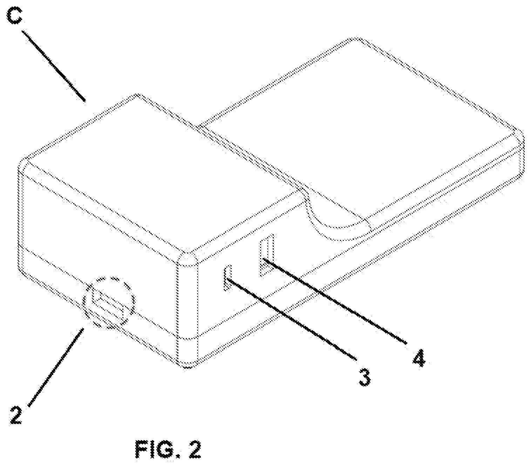

Figure 2 shows the device's charging points, including a USB A **(2)** cell phone battery input, located on the back of the device, which will be used by the user when the device is unplugged, and two USB B **(3)** and USB C **(4)** inputs from the power supply, located on the lateral side opposite to the connection point to the electrical network **(1),** which will be used when the device is connected to the electrical outlet. These connections allow the user to charge a total of two devices when the charger is plugged into an electrical outlet, as well as simultaneously charging its own battery.

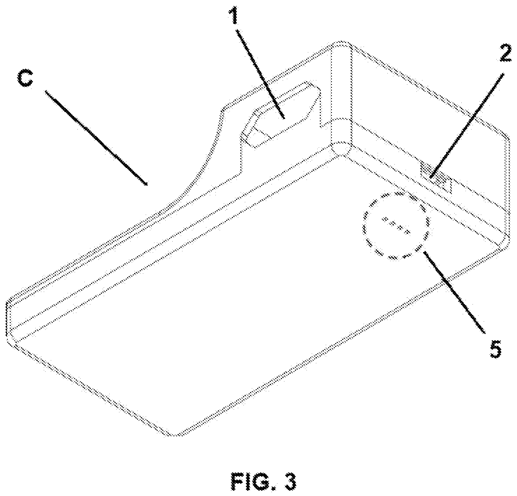

Figure 3 shows a bottom view of the charger, showing the points of the battery charge indicator lights **(5).**

It should be noted that, with the introduction of the fast charging power supply, the charging performance of the new charger has been improved, allowing simultaneous charge optimization of the cell phone device and the charger's internal battery.

Additionally, the design developed for the external part of the charger has improvements for its user, rendering the device more ergonomic, easier to store in pockets, backpacks and bags, providing an easier handling of the product.

## Claims

1. SMART CHARGER FOR MOBILE PHONE containing an additional battery built into its structure, which allows the simultaneous charge of the mobile phone and the additional battery,
wherein the said charger **C** comprises:
- a point of connection **(1)** to the electrical network, located on one lateral side of the device, where an electrical outlet will be placed;
- the charging points of the device, being a USB input **(2)** for the cell phone battery, located on the back of the device, which will be used by the user when the device is unplugged, and two USB inputs **(3** and **4)** for the power supply, located on the lateral side opposite to the connection point to the electrical network **(1),** which will be used when the device is connected to the electrical outlet; the device's charging points, being a USB input **(2)** for the cell phone battery, located on the back of the device, which will be used by the user when the device is not connected to the electrical outlet, and two USB inputs **(3** and **4)** for the power supply, located on the lateral side opposite to the connection point to the electrical network **(1),** which will be used when the device is connected to the electrical outlet
- points of the battery charge indicator lights **(5),** located on the bottom of the device.

2. SMART CHARGER FOR MOBILE PHONE according to claim 1, wherein the design developed for the external part of the charger has improvements for its user, rendering the device more ergonomic, and providing an easier handling of the product.
